(19) Europäisches Patentamt
European Patent Office
Office européen des brevets

(11) EP 0 844 822 B1

(12) EUROPÄISCHE PATENTSCHRIFT

(45) Veröffentlichungstag und Bekanntmachung des Hinweises auf die Patenterteilung:
**20.10.1999 Patentblatt 1999/42**

(21) Anmeldenummer: **96927684.9**

(22) Anmeldetag: **05.08.1996**

(51) Int. Cl.$^6$: **A01N 37/50**
// (A01N37/50, 47:04)

(86) Internationale Anmeldenummer:
**PCT/EP96/03453**

(87) Internationale Veröffentlichungsnummer:
**WO 97/06684 (27.02.1997 Gazette 1997/10)**

# (54) FUNGIZIDE MISCHUNGEN EINES OXIMETHERCARBONSÄUREAMIDS MIT EINEM N-TRICHLORMETHYLTHIOPHTHALIMID

FUNGICIDAL MIXTURES OF AN OXIME ETHER CARBOXYLIC ACID AMIDE WITH AN N-TRICHLOROMETHYL THIOPHTHALIMIDE

MELANGES FONGICIDES D'UN AMIDE D'ACIDE CARBOXYLIQUE D'ETHER D'OXIME AVEC UN N-TRICHLOROMETHYLE-THIOPHTALIMIDE

(84) Benannte Vertragsstaaten:
**AT BE CH DE DK ES FI FR GB GR IE IT LI NL PT SE**

(30) Priorität: **17.08.1995 DE 19530168**

(43) Veröffentlichungstag der Anmeldung:
**03.06.1998 Patentblatt 1998/23**

(73) Patentinhaber:
**BASF AKTIENGESELLSCHAFT
67056 Ludwigshafen (DE)**

(72) Erfinder:
- **SCHWALGE, Barbara
D-69115 Heidelberg (DE)**
- **MÜLLER, Ruth
D-67159 Friedelsheim (DE)**
- **BAYER, Herbert
D-68159 Mannheim (DE)**
- **SAUTER, Hubert
D-68167 Mannheim (DE)**
- **AMMERMANN, Eberhard
D-64646 Heppenheim (DE)**
- **LORENZ, Gisela
D-67434 Hambach (DE)**
- **STRATHMANN, Siegfried
D-67117 Limburgerhof (DE)**

(56) Entgegenhaltungen:
**EP-A- 0 645 088 WO-A-95/15083
WO-A-95/21154 GB-A- 2 279 568**

- **RESEARCH DISCLOSURE, Nr. 348, 1.April 1993, Seite 267, COMPL XP000304224 "MIXTURES OF FUNGICIDES AND HERBICIDES"**
- **PESTICIDE SCIENCE, Bd. 44, Nr. 1, Mai 1995, BARKING GB, Seiten 77-79, XP002020496 P.J.DE FRAIN ET AL.: "A New Series of Broad-Spectrum beta-Methoxyacrylate Fungicides with an Oxime Ether Side-Chain"**
- **DATABASE CROPU STN-International STN-accession no. 95-81855, E.AMMERMANN ET AL.: "BAS 490 F - a broad-spectrum strobilurin fungicide." XP002020497 & MITT.BIOL.BUNDESANST.LANDFORSTWIRTSCH., Nr. 301, 1994, Seite 397**
- **DATABASE CROPU STN-International STN-accession no. 95-81869, U.HAASE ET AL.: "Action mechanism of the strobilurin derivative BAS 490F." XP002020498 & MITT.BIOL.BUNDESANST.LANDFORSTWIRTSCH., Nr. 301, 1994, Seite 411**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Xerox (UK) Business Services
2.16.7/3.6

## Beschreibung

Die vorliegende Erfindung betrifft eine fungizide Mischung, welche

a) ein Oximethercarbonsäureamid der Formel I,

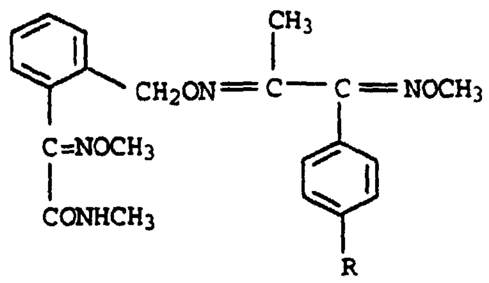

in der R für Wasserstoff oder Halogen steht
und

b) ein Phthalimidderivat ausgewählt aus der Gruppe der Verbindungen II und III

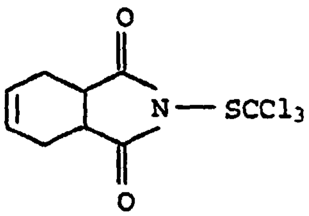

II

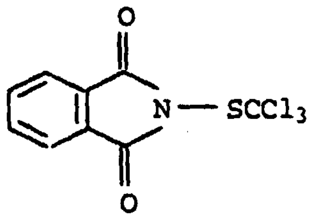

III

in einer synergistisch wirksamen Menge enthält.

Außerdem betrifft die Erfindung Verfahren zur Bekämpfung von Schadpilzen mit Mischungen der Verbindungen I und II bzw. der Verbindungen I und III und die Verwendung der Verbindung I, der Verbindung II und der Verbindung III zur Herstellung derartiger Mischungen.

Die Verbindungen der Formel I, ihre Herstellung und ihre Wirkung gegen Schadpilze sind aus der Literatur bekannt (WO-A 95/18,789). Gegenstand der WO-A 95/21154 sind ebenfalls Verbindungen I; als mögliche Mischungspartner werden auch Verbindungen II und III in einer umfangreichen Liste erwähnt.Ebenfalls bekannt sind die Phthalimidderivate II und III (US-A 2,553,770; 2,553,771; 2,553,776), deren Herstellung und deren Wirkung gegen Schadpilze.

Im Hinblick auf eine Senkung der Aufwandmengen und eine Verbesserung des Wirkungsspektrums der bekannten Verbindungen lagen der vorliegenden Erfindungen Mischungen als Aufgabe zugrunde, die bei verringerter Gesamtmenge an ausgebrachten Wirkstoffen eine verbesserte Wirkung gegen Schadpilzen aufweisen (synergistische Mischungen).

Demgemäß wurden die eingangs definierten Mischungen gefunden. Es wurde außerdem gefunden, daß sich bei gleichzeitiger gemeinsamer oder getrennter Anwendung der Verbindung I und der Verbindung II oder der Verbindung III oder bei Anwendung der Verbindung I und der Verbindungen II bzw. der Verbindung III nacheinander Schadpilze besser bekämpfen lassen als mit den Einzelverbindungen.

R in der Formel I steht für Wasserstoff oder ein Halogenatom wie Fluor, Chlor, Brom und Iod, besonders Wasserstoff, Fluor und Chlor, insbesondere Wasserstoff oder Fluor.

Die Verbindungen der Formel I können in Bezug auf die C=N-Doppelbindung in der E- oder der Z-Konfiguration (in Bezug auf die Gruppierung Carbonsäurefunktion) vorliegen. Demgemäß können sie in der erfindungsgemäßen Mischung jeweils entweder als reines E- oder Z-Isomer oder als E/Z-Isomerenmischung Verwendung finden. Bevorzugt findet die E/Z-Isomerenmischung oder das E-Isomer Anwendung, wobei das E-Isomer besonders bevorzugt ist.

Die C=N-Doppelbindungen der Oximethergruppierungen in der Seitenkette der Verbindungen I können jeweils als reine E- oder Z-Isomere oder als E/Z-Isomerengemische vorliegen. Die Verbindungen I können sowohl als Isomerengemische als auch als reine Isomere in den erfindungsgemäßen Mischungen verwendet werden. Im Hinblick auf ihre Verwendung werden insbesondere Verbindungen I bevorzugt, in denen beide Oximethergruppierungen in der Seitenkette in der E-Konfiguration vorliegen (E/E).

Die Verbindungen I sind wegen des basischen Charakters der NH-Gruppierung in der Lage, mit anorganischen oder organischen Säuren oder mit Metallionen Salze oder Addukte zu bilden.

Beispiele für anorganische Säuren sind Halogenwasserstoffsäuren wie Fluorwasserstoff, Chlorwasserstoff, Bromwasserstoff und Jodwasserstoff, Schwefelsäure, Phosphorsäure und Salpetersäure.

Als organischen Säuren kommen beispielsweise Ameisensäure, Kohlensäure und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder -disulfonsäuren (aromatische Reste wie Phenyl und Naphthyl welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl welche eine oder zwei Phosphorsäurereste tragen), wobei die Alkyl- bzw. Arylreste weitere Substituenten tragen können, z.B. p-Toluolsulfonsäure, Salizylsäure, p-Aminosalizylsäure, 2-Phenoxybenzoesäure, 2-Acetoxybenzoesäure etc.

Als Metallionen kommen insbesondere die Ionen der Elemente der zweiten Hauptgruppe, insbesondere Calzium und Magnesium, der dritten und vierten Hauptgruppe, insbesondere Aluminium, Zinn und Blei, sowie der ersten bis achten Nebengruppe, insbesondere Chrom, Mangan, Eisen, Kobalt, Nickel, Kupfer, Zink und andere in Betracht. Besonders bevorzugt sind die Metallionen der Elemente der Nebengruppen der vierten Periode. Die Metalle können dabei in den verschiedenen ihnen zukommenden Wertigkeiten vorliegen.

Bevorzugt setzt man bei der Bereitstellung der Mischungen die reinen Wirkstoffe I und II bzw. III ein, denen man je nach Bedarf weitere Wirkstoffe gegen Schadpilze oder andere Schädlinge wie Insekten, Spinntiere oder Nematoden, oder auch herbizide oder wachstumsregulierende Wirkstoffe oder Düngemittel beimischen kann.

Die Mischungen der Verbindungen I und II bzw. I und III bzw. die gleichzeitige gemeinsame oder getrennte Verwendung der Verbindungen I und II bzw. I und III zeichnen sich durch eine hervorragende Wirkung gegen ein breites Spektrum von pflanzenpathogenen Pilzen, insbesondere aus der Klasse der Ascomyceten und Basidiomyceten, aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen und Kürbisgewächse), Gerste, Gras, Hafer, Kaffee, Mais, Obstpflanzen, Reis, Roggen, Soja, Wein, Weizen, Zierpflanzen, Zuckerrohr und einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Puccinia-Arten an Getreide, Rhizoctonia-Arten an Baumwolle und Rasen, Ustilago-Arten an Getreide und Zuckerrohr, Venturia inaequalis (Schorf) an Äpfeln, Helminthosporium-Arten an Getreide, Septoria nodorum an Weizen, Botrytis cinera (Grauschimmel) an Erdbeeren und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Pseudoperonospora Cubense an Kurbisgewächsen, Plasmopara viticola an Reben, Alternaria-Arten an Gemüse und Obst sowie Fusarium- und Verticillium-Arten.

Sie sind außerdem im Materialschutz (z.B. Holzschutz) anwendbar, beispielsweise gegen Paecilomyces variotii.

Die Verbindungen I und II bzw. I und III können gleichzeitig gemeinsam oder getrennt oder nacheinander aufgebracht werden, wobei die Reihenfolge bei getrennter Applikation im allgemeinen keine Auswirkung auf den Bekämpfungserfolg hat.

Die Verbindungen I und II bzw. I und III werden üblicherweise in einem Gewichtsverhältnis von 1:1 bis 1:100, vorzugsweise 1:1 bis 1:50, insbesondere 1:3 bis 1:30 (I:II bzw. III) angewendet.

Die Aufwandmengen der erfindungsgemäßen Mischungen liegen je nach Art des gewünschten Effekts bei 0,02 bis 5 kg/ha, vorzugsweise 0,05 bis 3,5 kg/ha, insbesondere 0,1 bis 3,5 kg/ha. Die Aufwandmengen liegen dabei für die Verbindungen I bei 0,005 bis 0,5 kg/ha, vorzugsweise 0,01 bis 0,5 kg/ha, insbesondere 0,01 bis 0,3 kg/ha. Die Aufwandmengen für die Verbindungen II bzw. die Verbindungen III liegen entsprechend bei 0,1 bis 5 kg/ha, vorzugsweise 0,1 bis 3,5 kg/ha.

Bei der Saatgutbehandlung werden im allgemeinen Aufwandmengen an Mischung von 0,001 bis 50 g/kg Saatgut, vorzugsweise 0,01 bis 10 g/kg, insbesondere 0,01 bis 5 g/kg verwendet.

Sofern für Pflanzen pathogene Schadpilze zu bekämpfen sind erfolgt die getrennte oder gemeinsame Applikation der Verbindungen I und II bzw. I und III oder der Mischungen aus den Verbindungen I und II bzw. I und III durch besprühen oder bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I und II bzw. I und III können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether-und Fettalkoholsulfaten, sowie Salze sulfatierter Hexa-, Hepta-und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver Streu- und Stäubemittel können durch Mischen oder gemeinsames Vermahlen der Verbindungen I oder II bzw. I oder III oder der Mischung aus den Verbindungen I und II bzw. I und III mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Kalzium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I oder II bzw. I oder III bzw. der Mischung aus den Verbindungen I und II bzw. I und III. Die Wirkstoffe werden dabei in einer Reinheit von 90 % bis 100 %, vorzugsweise 95 % bis 100 % (nach NMR- oder HPLC-Spektrum) eingesetzt.

Die Verbindungen I oder II bzw. I oder III bzw. die Mischungen oder die entsprechenden Formulierungen werden angewendet, indem man die Schadpilze, die von ihnen freizuhaltenden Pflanzen, Samen, Böden, Flächen, Materialien oder Räume mit einer fungizid wirksamen Menge der Mischung, bzw. der Verbindungen I und II bzw. I und III bei getrennter Ausbringung, behandelt. Die Anwendung kann vor oder nach dem Befall durch die Schadpilze erfolgen.

Beispiele zur synergistischen Wirkung der erfindungsgemäßen Mischungen gegen Schadpilze

Die fungizide Wirkung der Verbindungen und der Mischungen ließ sich durch folgende Versuche zeigen:

Die Wirkstoffe wurden getrennt oder gemeinsam als 10 %-ige Emulsion in einem Gemisch aus 70 Gew.-% Cyclohexanon, 20 Gew.-% Nekanil® LN (Lutensol® AP6, Netzmittel mit Emulgier- und Dispergierwirkung auf der Basis ethoxylierter Alkylphenole) und 10 Gew.-% Emulphor® EL (Emulan® EL, Emulgator auf der Basis ethoxylierter Fettalkohole) aufbereitet und entsprechend der gewünschten Konzentration mit Wasser verdünnt.

Die Auswertung erfolgte Feststellung der befallenen Blattflächen in Prozent. Diese Prozent-Werte wurden in Wirkungsgrade umgerechnet. Die zu erwartenden Wirkungsgrade der Wirkstoffmischungen wurden nach der Colby Formel [R.S. Colby, Weeds 15, 20-22 (1967)] ermittelt und mit den beobachteten Wirkungsgraden verglichen.

Colby Formel:

$$E = x + y - x \cdot y/100$$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

Bei einem Wirkungsgrad von 0 entspricht der Befall der behandelten Pflanzen demjenigen der unbehandelten Kontrollpflanzen; bei einem Wirkungsgrad von 100 wiesen die behandelten Pflanzen keinen Befall auf.

Wirksamkeit gegen Botrytis cinerea (Grauschimmel)

Paprikasämlinge (Sorte: "Neusiedler Ideal Elite") mit 4-5 Blättern wurden mit der Wirkstoffaufbereitung tropfnaß gespritzt. Nach dem Abtrocknen wurden die Pflanzen mit einer Konidienaufschwemmung des Pilzes *Botrytis cinerea* besprüht und 5 Tage bei 22-24°C bei hoher Luftfeuchtigkeit bewahrt. Die Auswertung erfolgte visuell.
Die Ergebnisse der Versuche sind in den folgenden Tabellen zusammengestellt:

| Aktivität der Wirkstoffe bei getrennter Applikation: | | |
|---|---|---|
| **Wirkstoff** | **Aufwandmenge [ppm]** | **Wirkungsgrad [%]** |
| I.1 (R = H) | 200 | 36 |
| | 125 | 36 |
| | 100 | 49 |
| | 50 | 36 |
| I.2 (R = F) | 200 | 61 |
| | 125 | 36 |
| | 100 | 49 |
| | 50 | 10 |
| II (Captan) | 100 | 0 |
| | 50 | 23 |
| | 25 | 0 |
| | 12,5 | 10 |
| III (Folpet) | 100 | 36 |
| | 50 | 23 |
| | 25 | 10 |
| | 12,5 | 0 |
| unbehandelte Kontrolle | -/- | 0 |

| Aktivität der erfindungsgemäßen synergistischen Mischungen: | | | | |
|---|---|---|---|---|
| **Synergistische Mischung** | | | **Wirkungsgrad** | |
| **Wirkstoffe** | **ppm** | **Verhältnis** | **beobachtet** | **berechnet** |
| **I.1 + II** | 125 + 12,5 | 10/1 | 87 | 42 |
| | 200 + 200 | 1/1 | 94 | 50 |
| | 100 + 100 | 1/1 | 87 | 49 |
| | 50 + 50 | 1/1 | 81 | 50 |
| **I.1 + III** | 125 + 12,5 | 10/1 | 87 | 36 |
| | 200 + 200 | 1/1 | 87 | 50 |
| | 100 + 100 | 1/1 | 91 | 67 |
| | 50 + 50 | 1/1 | 87 | 50 |
| **I.2 + II** | 125 + 12,5 | 10/1 | 87 | 65 |
| | 200 + 200 | 1/1 | 74 | 50 |
| | 100 + 100 | 1/1 | 81 | 49 |
| | 50 + 50 | 1/1 | 81 | 31 |
| **I.2 + III** | 125 + 12,5 | 10/1 | 74 | 61 |
| | 200 + 200 | 1/1 | 81 | 50 |
| | 100 + 100 | 1/1 | 94 | 67 |
| | 50 + 50 | 1/1 | 96 | 31 |

## Patentansprüche

1. Fungizide Mischung, enthaltend

   a) ein Oximethercarbonsäureamid der Formel I,

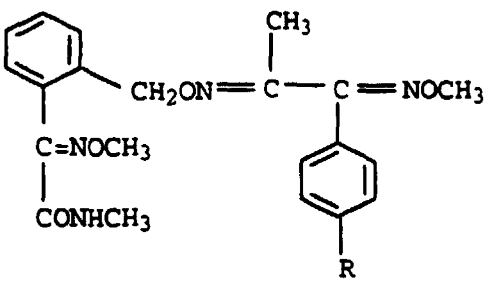

   in der R für Wasserstoff oder Halogen steht
   und

   b) ein Phthalimidderivat ausgewählt aus der Gruppe der Verbindungen II und III

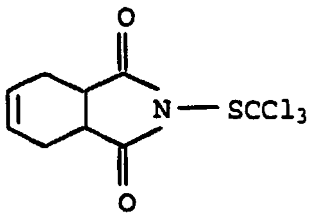

II

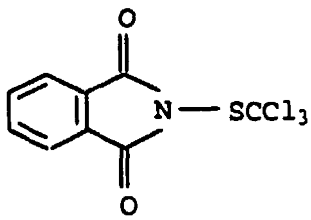

III

in einer synergistisch wirksamen Menge.

2. Fungizide Mischung nach Anspruch 1, enthaltend ein Oximethercarbonsäureamid der Formel I gemäß Anspruch 1 und das Phthalimidderivat II.

3. Fungizide Mischung nach Anspruch 1, enthaltend ein Oximethercarbonsäureamid der Formel I gemäß Anspruch 1 und das Phthalimidderivat III.

4. Fungizide Mischung nach Anspruch 1, dadurch gekennzeichnet, daß das Gewichtsverhältnis der Verbindung I zu der Verbindung II oder der Verbindung III 1:1 bis 1:100 beträgt.

5. Verfahren zur Bekämpfung von Schadpilzen, dadurch gekennzeichnet, daß man die Schadpilze, deren Lebensraum oder die von ihnen freizuhaltenden Pflanzen, Samen, Böden, Flächen, Materialien oder Räume mit einer Verbindung der Formel I gemäß Anspruch 1 und einer der Verbindungen der Formel II gemäß Anspruch 1 bzw. der Verbindung der Formel III gemäß Anspruch 1 behandelt.

6. Verfahren nach Anspruch 5, dadurch gekennzeichnet, daß man die Verbindung I gemäß Anspruch 1 und die Verbindung II gemäß Anspruch 1 bzw. die Verbindung III gemäß Anspruch 1 gleichzeitig gemeinsam oder getrennt oder nacheinander ausbringt.

7. Verfahren nach Anspruch 5, dadurch gekennzeichnet, daß man die Schadpilze, deren Lebensraum oder die von ihnen freizuhaltenden Pflanzen, Samen, Böden, Flächen, Materialien oder Räume mit 0,005 bis 0,5 kg/ha der Verbindung I gemäß Anspruch 1 behandelt.

8. Verfahren nach Anspruch 5, dadurch gekennzeichnet, daß man die Schadpilze, deren Lebensraum oder die von ihnen freizuhaltenden Pflanzen, Samen, Böden, Flächen, Materialien oder Räume mit 0,1 bis 5 kg/ha der Verbindung II gemäß Anspruch 1 bzw. der Verbindung III gemäß Anspruch 1 behandelt.

9. Verwendung der Verbindung I gemäß Anspruch 1 zur Herstellung von fungizid wirksamen synergistischen Mischungen gemäß Anspruch 1.

10. Verwendung der Verbindungen II gemäß Anspruch 1 zur Herstellung von fungizid wirksamen synergistischen Mischungen gemäß Anspruch 1.

11. Verwendung der Verbindungen III gemäß Anspruch 1 zur Herstellung von fungizid wirksamen synergistischen Mischungen gemäß Anspruch 1.

## Claims

1. A fungicidal mixture comprising

   a) an oxime ether carboxamide of the formula I

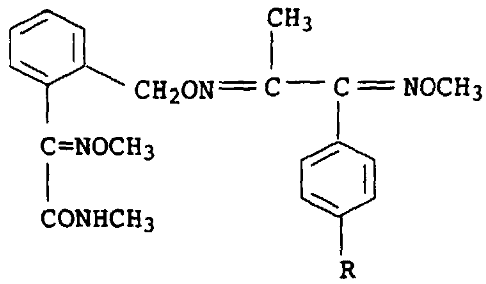

   where R is hydrogen or halogen and

   b) a phthalimide derivative selected from the group consisting of the compounds II and III

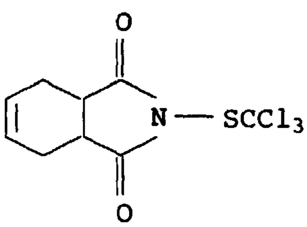

II

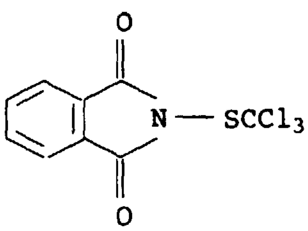

III

   in a synergistically active amount.

2. A fungicidal mixture as claimed in claim 1 comprising an oxime ether carboxamide of the formula I as set forth in claim 1 and the phthalimide derivative II.

3. A fungicidal mixture as claimed in claim 1 comprising an oxime ether carboxamide of the formula I as set forth in claim 1 and the phthalimide derivative III.

4. A fungicidal mixture as claimed in claim 1, wherein the weight ratio of the compound I to the compound II or the compound III is 1:1 to 1:100.

5. A method of controlling harmful fungi, which comprises treating the harmful fungi, their environment, or the plants, seeds, soils, areas, materials or spaces to be kept free from them with a compound of the formula I as set forth in claim 1 and one of the compounds of the formula II as set forth in claim 1 or the compound of the formula III as set forth in claim 1.

6. A method as claimed in claim 5, wherein the compound I as set forth in claim 1 and the compound II as set forth in claim 1 or the compound III as set forth in claim 1 are applied simultaneously together or separately or in succession.

7. A method as claimed in claim 5, wherein the harmful fungi, their environment, or the plants, seeds, soils, areas, materials or spaces to be kept free from them are treated with 0.005 to 0.5 kg/ha of the compound I as set forth in claim 1.

8. A method as claimed in claim 5, wherein the harmful fungi, their environment, or the plants, seeds, soils, areas, materials or spaces to be kept free from them are treated with 0.1 to 5 kg/ha of the compound II as set forth in claim 1 or of the compound III as set forth in claim 1.

9. The use of the compounds I as set forth in claim 1 for the preparation of fungicidally active synergistic mixtures as claimed in claim 1.

10. The use of the compound II as set forth in claim 1 for the preparation of fungicidally active synergistic mixtures as claimed in claim 1.

11. The use of the compound III as set forth in claim 1 for the preparation of fungicidally active synergistic mixtures as claimed in claim 1.

**Revendications**

1. Mélange fongicide contenant

a) un amide d'acide oximéthercarboxylique de formule I

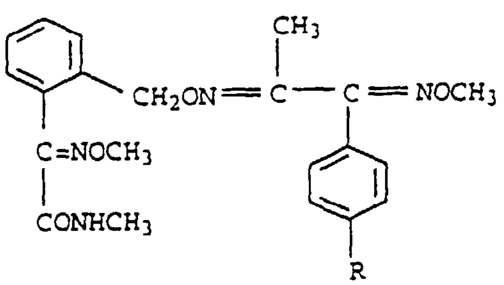

dans laquelle R représente l'hydrogène ou un halogène
et

b) un dérivé du phtalimide choisi dans le groupe des composés II et III

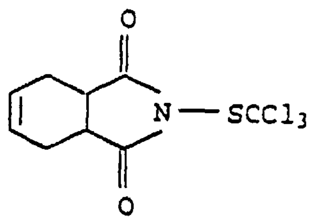

II

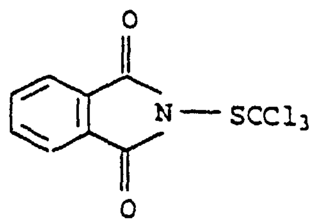

III

en quantité synergique efficace.

2. Mélange fongicide selon la revendication 1, contenant un amide d'acide oximéthercarboxylique de formule I selon la revendication 1 et le dérivé du phtalimide II.

3. Mélange fongicide selon la revendication 1, contenant un amide d'acide oximéthercarboxylique de formule I selon la revendication 1 et le dérivé du phtalimide III.

4. Mélange fongicide selon la revendication 1, caractérisé par le fait que les proportions relatives en poids entre le composé I et le composé II ou le composé III vont de 1 : 1 à 1 : 100.

5. Procédé pour combattre les mycètes nuisibles, caractérisé par le fait que l'on traite les mycètes nuisibles, leur habitat ou les végétaux, semences, sols, aires, matériaux ou locaux qu'on veut protéger contre les mycètes par un composé de formule I selon la revendication 1 et l'un des composés de formules II et III selon la revendication 1.

6. Procédé selon la revendication 5, caractérisé par le fait que l'on applique le composé I selon la revendication 1 et le composé II selon la revendication 1 ou le composé III selon la revendication 1 en même temps, ensemble ou séparément, ou successivement.

7. Procédé selon la revendication 5, caractérisé par le fait que l'on traite les mycètes nuisibles, leur habitat ou les végétaux, semences, sols, aires, matériaux ou locaux qu'on veut protéger contre les mycètes par 0,005 à 0,5 kg/ha du composé I.

8. Procédé selon la revendication 5, caractérisé par le fait que l'on traite les mycètes nuisibles, leur habitat ou les végétaux, semences, sols, aires, matériaux ou locaux qu'on veut protéger contre les mycètes par 0,1 à 5 kg/ha du composé II selon la revendication 1 ou du composé III selon la revendication 1.

9. Utilisation du composé I selon la revendication 1 pour la préparation des mélanges fongicides à activité synergique selon la revendication 1.

10. Utilisation des composés II selon la revendication 1 pour la préparation des mélanges fongicides à activité synergique selon la revendication 1.

11. Utilisation des composés III selon la revendication 1 pour la préparation des mélanges fongicides à activité synergique selon la revendication 1.